# EUROPÄISCHE PATENTSCHRIFT

(11) **EP 4 527 606 B1**
(45) Veröffentlichungstag und Bekanntmachung des Hinweises auf die Patenterteilung: **20.08.2025**
(21) Anmeldenummer: 24196735.5
(22) Anmeldetag: 27.08.2024
(51) Int. Cl.: B30B 11/00, B30B 11/08, B30B 15/00, B30B 15/26

(54) **VERFAHREN ZUR VERSUCHSPRESSUNG VON PRESSLINGEN IN EINER RUNDLÄUFERPRESSE**
PROCESS TO PERFORM TABLET COMPRESSION TEST IN A ROTARY TABLET PRESS
PROCÉDÉ DE RÉALISATION D'ESSAIS DE COMPRESSION DE COMPRIMÉS DANS UNE PRESS ROTATIVE

(30) Priorität: 21.09.2023 DE 102023125660
(43) Veröffentlichungstag der Anmeldung: 26.03.2025
(73) Patentinhaber: Fette Compacting GmbH, 21493 Schwarzenbek (DE)
(72) Erfinder: Liesack, Patrick, 22043 Hamburg (DE); Seifert, Werner, 21465 Wentorf (DE)
(74) Vertreter: Hauck Patent- und Rechtsanwälte PartmbB

(56) Entgegenhaltungen:
- DE-B3- 10 319 024
- DE-C- 328 850

## Beschreibung

Die Erfindung betrifft ein Verfahren zur Versuchspressung von Presslingen in einer Rundläuferpresse, umfassend einen drehend angetriebenen Rotor mit oberen und unteren Pressstempeln, einer oberen und unteren Stempelführung für die oberen und unteren Pressstempel und einer Matrizenschreibe zwischen den Stempelführungen, wobei die oberen und unteren Pressstempel im Produktionsbetrieb der Rundläuferpresse mit Aufnahmen der Matrizenscheibe zusammenwirken, weiter umfassend eine Fülleinrichtung, in der im Produktionsbetrieb der Rundläuferpresse zu verpressendes Material in die Aufnahmen gefüllt wird, weiter umfassend eine Druckeinrichtung mit einer oberen Druckeinheit und einer unteren Druckeinheit, die im Produktionsbetrieb der Rundläuferpresse mit den oberen und unteren Pressstempeln zusammenwirken, so dass diese in den Aufnahmen befindliches Material zu Presslingen verpressen.

Versuchspressungen werden durchgeführt, um zum Beispiel für neue zu verpressende Materialien die optimalen Einstellparameter der Rundläuferpresse zur Herstellung von Presslingen im Produktionsbetrieb zu ermitteln. Bei den Presslingen kann es sich insbesondere um Tabletten handeln. Um im Rahmen einer Versuchspressung eine Tablette mit möglichst geringem Produkteinsatz zu pressen, werden sogenannte Single-Punch-Tablettenpressen verwendet, die nur ein Stempelpaar aus einem oberen und einem unteren Stempel aufweisen. Es handelt sich um speziell für Versuchspressungen konstruierte Pressen, die häufig keinen Rotor aufweisen und insbesondere nicht für einen regulären Produktionsbetrieb zur Herstellung von Presslingen vorgesehen oder geeignet sind. Mit solchen Versuchspressen werden für ein bestimmtes Produkt, also ein bestimmtes zu verpressendes Material, alle Daten im Rahmen von Versuchspressungen ermittelt, die für die Herstellung von Tabletten aus dem Material im Produktionsbetrieb relevant sind. Die gewonnenen Daten müssen anschließend auf die jeweilige für den Produktionsbetrieb vorgesehen Rundläuferpresse übertragen und dort angepasst werden, um die jeweils gewünschten Eigenschaften der herzustellenden Tabletten zu erhalten. Der Vorteil solcher Single-Punch-Versuchspressen liegt darin, dass für die Versuchspressung nur ein sehr geringer Produkteinsatz erforderlich ist, insbesondere lediglich für eine oder mehrere im Rahmen der Versuchspressung herzustellende Presslinge. Nachteilig ist, dass zusätzlich zu der für den Produktionsbetrieb vorgesehenen Rundläuferpresse eine Versuchspresse vorzusehen ist. Außerdem können die erzeugten Daten nicht direkt auf die für den Produktionsbetrieb vorgesehene Rundläuferpresse übertragen werden, insbesondere aufgrund unterschiedlicher Komponenten der Pressen. Die erzeugten Daten müssen also an die Produktionspresse angepasst werden. Für diese Anpassung ist es regelmäßig erforderlich, weitere Versuchspressungen auf der für den Produktionsbetrieb vorgesehenen Rundläuferpresse durchzuführen.

Aus DE 103 19 024 B3 ist ein Verfahren zur Versuchspressung von Tabletten in einer Rundläufertablettiermaschine bekannt, das in einer für einen regulären Produktionsbetrieb vorgesehenen Rundläuferpresse durchgeführt wird. Dabei wird ein für eine Einzelpressung ausgewähltes Stempelpaar automatisch auf eine Füllposition gefahren und bei zumindest teilweise entfernter Füllanordnung und stillstehendem Rotor eine Matrize oder eine beschränkte Anzahl von Matrizen mit Material befüllt. Der Rotor wird anschließend in Drehung versetzt und so beschleunigt, dass er in der Druckstation der Rundläuferpresse die gewünschte Produktionsgeschwindigkeit hat. Nach einer Umdrehung wird der Rotor in der Füllposition wieder angehalten. Während der Umdrehung des Rotors werden Signale oder Signalverläufe der Messstellen aufgezeichnet und in einen Rechner zur Anzeige und Auswertung gegeben. Vorteilhaft bei diesem Verfahren ist, dass keine separate Versuchspresse für die Versuchspressung erforderlich ist. Dies verringert den Aufwand. Gleichzeitig können die im Rahmen der Versuchspressung gewonnenen Daten direkt und im Wesentlichen ohne Anpassung verwendet werden, da sie bereits auf der für den Produktionsbetrieb vorgesehenen Rundläuferpresse erzeugt wurden. Auch hierdurch verringert sich der Aufwand. Indem nur eine oder wenige Matrizen mit Material befüllt werden, kann gleichzeitig der erforderliche Produkteinsatz für die Versuchspressung gering gehalten werden. Allerdings muss die Steghöhe der erzeugten Tablette bei der ersten Versuchspressung aufgrund der Füllmenge in der Matrize geschätzt werden. Es entsteht eine zunächst unbekannte Presskraft an der Druckstation. Die für das jeweilige Produkt gewünschte Presskraft muss entsprechend im Rahmen einer Reihe von Versuchspressungen ermittelt werden. Hierdurch erhöhen sich der Aufwand und der Produkteinsatz wieder.

Ausgehend von dem erläuterten Stand der Technik liegt der Erfindung die Aufgabe zugrunde, ein Verfahren der eingangs genannten Art bereitzustellen, das zuverlässig und mit geringem Aufwand eine Versuchspressung zum Einstellen einer Rundläuferpresse für einen Produktionsbetrieb ermöglicht.

Die Erfindung löst die Aufgabe durch den unabhängigen Anspruch 1. Vorteilhafte Ausgestaltungen finden sich in den abhängigen Ansprüchen, der Beschreibung und der Figuren.

Für ein Verfahren der eingangs genannten Art löst die Erfindung die Aufgabe durch die Schritte:
- ein einer Aufnahme der Matrizenscheibe zugeordnetes Stempelpaar aus einem oberen und unteren Pressstempel wird in eine Dosierposition gebracht, in der der obere Pressstempel aus der Aufnahme nach oben herausbewegt ist und sich der untere Pressstempel teilweise in der Aufnahme befindet, so dass der untere Pressstempel eine maximale Füllhöhe von zu verpressendem Material in der Aufnahme vorgibt,
- zu verpressendes Material wird in die Aufnahme gefüllt,
- die Druckeinheiten der Druckeinrichtung werden derart aufeinander zugestellt, dass eine erwartete Steghöhe eines in der Versuchspressung herzustellenden Presslings erreicht wird bevor das Stempelpaar bei einer Drehung des Rotors den Ort des geringsten Abstands zwischen den Druckeinheiten überschreitet,
- der Rotor wird in Drehbewegung versetzt, so dass das Stempelpaar zum Verpressen des in die Aufnahme gefüllten Materials zu einem Pressling in Kontakt mit den Druckeinheiten gelangt, wobei die Presskraft und/oder ein die Presskraft charakterisierender Parameter ermittelt wird,
- bei Erreichen einer vorgegebenen Presskraft und/oder eines vorgegebenen Werts des die Presskraft charakterisierenden Parameters wird der Rotor angehalten und in die entgegengesetzte Richtung gedreht, so dass das Stempelpaar außer Kontakt mit den Druckeinheiten gelangt.

Die bei dem erfindungsgemäßen Verfahren zum Einsatz kommende Rundläuferpresse ist eine Rundläuferpresse, die für den regulären Produktionsbetrieb von Presslingen, insbesondere Tabletten, aus insbesondere pulverförmigem Material vorgesehen ist. Die Rundläuferpresse umfasst in an sich bekannter Weise einen Rotor mit einer Vielzahl von oberen und unteren Pressstempeln, die paarweise jeweils einer Aufnahme bzw. Kavität einer Matrizenscheibe zugeordnet sind. Die Aufnahmen können als unmittelbare Bohrungen in der Matrizenscheibe ausgeführt sein. Sie können aber auch in hülsenartigen Einsätzen ausgebildet sein, die in entsprechend größere Aufnahmen der Matrizenscheibe eingesetzt werden. Im Betrieb der Rundläuferpresse drehen die oberen und unteren Pressstempel gemeinsam mit der Matrizenscheibe, wobei ihre axiale Bewegung durch Steuerkurven gesteuert und durch obere und untere Stempelführungen geführt wird. Die Steuerkurven wirken in der Regel mit den Stempelköpfen der Pressstempel zusammen. Im Zuge der Drehung durchläuft die Matrizenscheibe im Produktionsbetrieb verschiedene Einrichtungen der Rundläuferpresse, nämlich eine Fülleinrichtung, in der zu verpressendes Pulvermaterial in die Aufnahmen der Matrizenscheibe gefüllt wird und eine Druckeinrichtung, in der die oberen und unteren Pressstempel durch obere und untere Druckeinheiten, zum Beispiel obere und untere Druckrollen oder Druckkeile, zum Verpressen des Pulvermaterials zu Presslingen, wie Tabletten, in die Aufnahmen gedrückt werden. Die Druckeinrichtung kann obere und untere Vordruckeinheiten, zum Beispiel Vordruckrollen, und obere und untere Hauptdruckeinheiten, zum Beispiel Hauptdruckrollen, aufweisen. Nachfolgend zu der Druckeinrichtung werden die oberen Pressstempel im Produktionsbetrieb nach oben aus den Aufnahmen geführt und die in den Aufnahmen erzeugten Presslinge werden durch die unteren Stempel auf die Oberseite der Matrizenscheibe geschoben. Hierfür sind Auswerferkurven vorgesehen, die die unteren Pressstempel nach oben bewegen. Beispielsweise durch einen Abstreifer werden die Presslinge anschließend von der Matrizenscheibe in einen Ausgang der Rundläuferpresse abgestreift, von wo sie einer weiteren Verarbeitung zugeführt werden. Die Steuerkurven umfassen in der Regel auch Dosierkurven, die bei aus der jeweiligen Aufnahme nach oben herausgeführtem oberen Pressstempel den unteren Pressstempel in eine vorgegebene teilweise in die Aufnahme eingeführte Position bringen. Der untere Pressstempel bildet in dieser Dosierposition einen Boden der jeweiligen Aufnahme und definiert so die maximale Füllhöhe des in die Aufnahme eingefüllten Materials.

Wie bereits erläutert, handelt es sich bei der in dem erfindungsgemäßen Verfahren eingesetzten Rundläuferpresse um eine solche für den regulären Produktionsbetrieb vorgesehene Rundläuferpresse. Sie kann, wie nachstehend noch näher erläutert wird, für das Durchführen der Versuchspressung angepasst werden. Insbesondere können Komponenten der Rundläuferpresse, zum Beispiel obere und untere Pressstempel und/oder die Fülleinrichtung vor Beginn einer Versuchspressung demontiert werden. Bei dem erfindungsgemäßen Verfahren wird ein einer Aufnahme der Matrizenscheibe zugeordnetes Stempelpaar aus oberem und unterem Pressstempel in die Dosierposition gebracht, in der wie erläutert der obere Pressstempel aus der Aufnahme herausbewegt ist und sich der untere Pressstempel teilweise in der Aufnahme befindet, so dass er die maximale Füllhöhe des zu verpressenden Materials in der Aufnahme vorgibt. Der Rotor kann in der Dosierposition des Stempelpaars stillstehen. Anschließend wird das zu verpressende Material, das wie erläutert insbesondere pulverförmig sein kann, in die Aufnahme gefüllt. Das Bringen des Stempelpaares in die Dosierposition kann in besonders praxisgemäßer Weise durch eine entsprechende Drehung des Rotors erfolgen. Es ist aber auch möglich, dass das Stempelpaar gezielt an der Dosierposition in dem Rotor montiert wird.

Bei dem erfindungsgemäßen Verfahren werden weiterhin die oberen und unteren Druckeinheiten der Druckeinrichtung aufeinander zubewegt auf ein Maß, dass eine erwartete Steghöhe eines in der Versuchspressung herzustellenden Presslings, insbesondere einer Tablette, erreicht wird bevor das Stempelpaar bei einer Drehung des Rotors den Ort des geringsten Abstands zwischen den Druckeinheiten überschreitet, insbesondere bevor das Stempelpaar bei einer Drehung des Rotors den Ort des geringsten Abstands zwischen den Druckeinheiten erreicht. Die Steghöhe entspricht dabei der Höhe der Mantelfläche des Presslings, also des insbesondere zylindrischen Abschnitts des Presslings. Sie wird auch als zylindrische Höhe bezeichnet. Die Steghöhe ist insbesondere der Abschnitt des Presslings, welcher nicht von der Form der Stempelspitzen der den Pressling verpressenden Pressstempel geprägt wird. So bewegen sich gegenüberliegende Pressstempel im Zuge eines Pressvorgangs aufeinander zu bis zu einem geringsten Abstand, der der Steghöhe entspricht. Eine etwaige zum Beispiel konvexe Formabweichung des Presslings oberhalb oder unterhalb der Mantelfläche wird nicht berücksichtigt Die Steghöhe des hergestellten Presslings ergibt sich also aus dem kleinsten Abstand, welcher sich im Zuge des Pressvorgangs zwischen Ober- und Unterstempel ergibt. Entsprechend wird die Steghöhe bei gegebener axialer Stempellänge durch den Abstand zwischen den Druckeinheiten definiert.

Wie erläutert, kann es sich bei der oberen Druckeinheit um eine obere Druckrolle oder einen oberen Druckkeil handeln, und bei der unteren Druckeinheit um eine untere Druckrolle oder einen unteren Druckkeil.

Im Zuge der Drehung des Rotors gelangt ein Stempelpaar in Kontakt mit den Druckeinheiten der Druckeinrichtung. Vorgegeben durch die Geometrie der Druckeinheiten verringert sich der Abstand zwischen den Druckeinheiten in Drehrichtung des Rotors bzw. des Stempelpaars. Beispielsweise bei Druckrollen läuft das Stempelpaar im Zuge der Rotordrehung gegen den ansteigenden Radius der Druckrollen. Der Abstand zwischen den Druckeinheiten verringert sich bei weiterer Drehung des Rotors bis das Stempelpaar einen geringsten Abstand zwischen den Druckeinheiten erreicht. Beispielsweise bei Druckrollen ist dieser erreicht, wenn sich die Stempel des Stempelpaars mit ihren Längsachsen auf einer gedachten Linie zwischen den Drehachsen gegenüberliegender Druckrollen befinden. Im Zuge der weiteren Drehung des Rotors vergrößert sich der Abstand zwischen den Druckeinheiten wieder und die Stempel des Stempelpaars werden auseinandergeführt. Durch das erfindungsgemäße Zusammenfahren der Druckeinheiten derart, dass eine erwartete Steghöhe eines in der Versuchspressung herzustellenden Presslings erreicht wird bevor das Stempelpaar bei einer Drehung des Rotors den Ort des geringsten Abstands zwischen den Druckeinheiten überschreitet, ist sichergestellt, dass der Pressvorgang bis zu der gewünschten maximalen Presskraft auf einer ansteigenden Geometrie der Druckeinheiten, zum Beispiel einem ansteigenden Radius der Druckrollen, also im Bereich des sich verkleinernden Abstands zwischen den Druckeinheiten, abgeschlossen ist. Für die Versuchspressung wird der Rotor der Rundläuferpresse in Drehbewegung gebracht, so dass das Stempelpaar zum Verpressen des in die Aufnahme geführten Materials in Kontakt mit den Druckeinheiten gelangt. Während des durch den Kontakt der oberen und unteren Pressstempel mit den oberen und unteren Druckeinheiten bewirkten Pressvorgangs wird die Presskraft und/oder ein die Presskraft charakterisierender Parameter ermittelt. Bei der Versuchspressung wird das Stempelpaar durch die Drehbewegung des Rotors wie erläutert in Kontakt mit den Druckeinheiten gebracht und weiter gegen die ansteigende Geometrie der Druckeinheiten geführt. Durch die fortgeführte Drehbewegung des Rotors folgen die oberen und unteren Pressstempel wie bei einer regulären Produktionspressung der Druckeinheitengeometrie und führen entsprechend eine vertikale Bewegung aufeinander zu aus. Dadurch wird das in der Aufnahme befindliche Material zu dem Pressling verpresst. Sobald auf Grundlage der ermittelten Werte für die Presskraft oder den die Presskraft charakterisierenden Parameter das Erreichen einer vorgegebenen Presskraft und/oder eines vorgegebenen Werts des die Presskraft charakterisierenden Parameters festgestellt wird, wird die Drehbewegung des Rotors gestoppt und der Rotor wieder in die entgegengesetzte Drehrichtung gedreht, so dass das Stempelpaar wieder außer Kontakt mit den Druckeinheiten gelangt. Der erzeugte Pressling kann beispielsweise manuell aus der Aufnahme entnommen werden. Die axiale Bewegung der oberen und unteren Pressstempel wird dabei von den Steuerkurven der Rundläuferpresse zusammen mit der oberen und unteren Stempelführung geführt. Der Rotor kann dabei zurück in die Dosierposition des Stempelpaares gedreht werden. Es ist aber auch möglich, den Rotor in eine andere Drehposition zu bringen, in der zum Beispiel die Entnahme des hergestellten Presslings besonders einfach ist, zum Beispiel eine Auswurfposition, in der der untere Pressstempel den Pressling auf die Oberseite der Matrizenscheibe befördert.

Das erfindungsgemäße Verfahren erlaubt eine Versuchspressung einzelner Tabletten mit geringstem Produkteinsatz des zu verpressenden Materials auf einer für den regulären Produktionsbetrieb vorgesehenen Rundläuferpresse. Die im Rahmen der Versuchspressung erzeugten Daten liegen direkt im System der für den Produktionsbetrieb vorgesehenen Rundläuferpresse vor. Es ist weder eine Datenübertragung von einer separaten Versuchspresse noch eine Anpassung der Daten an die für den Produktionsbetrieb vorgesehene Rundläuferpresse notwendig. Durch den Verzicht auf eine Versuchspresse wird ein geringerer Installationsaufwand erreicht. Auch die Versuchspressung selber erfordert nur einen geringen Installationsaufwand. Indem erfindungsgemäß die Druckeinheiten der Druckeinrichtung auf ein Maß zusammengefahren werden, das die für das jeweilige Material gewünschte Presskraft bei einem vollständigen Durchlaufen der Druckeinrichtung übersteigen würde, kann auf Grundlage des Ermittelns der Presskraft oder des die Presskraft charakterisierenden Parameters während der Versuchspressung zuverlässig sichergestellt werden, dass die vorgegebene Presskraft erreicht und nicht überschritten wird. Sobald die gewünschte Presskraft erreicht ist, wird der Pressvorgang durch Anhalten der Drehbewegung des Rotors beendet und das Stempelpaar wird in entgegengesetzter Richtung aus der Druckeinrichtung, insbesondere dem Kontakt mit den Druckeinheiten herausgefahren. Der Pressvorgang findet vollständig statt bevor das Stempelpaar den geringsten Abstand zwischen den Druckeinheiten überschritten hat. Somit kann bereits der erste Pressling einer Versuchspressung mit der gewünschten Presskraft gepresst werden, auch ohne Kenntnis des Kompressionsverhaltens des jeweiligen zu verpressenden Materials, d. h. unabhängig davon, welche Steghöhe der Pressling erreicht. Die gewünschte Presskraft kann vor der Versuchspressung festgelegt und mit dem erfindungsgemäßen Verfahren präzise erreicht werden.

Das erfindungsgemäße Verfahren kann beispielsweise bis auf ein manuelles Befüllen der Aufnahme gesteuert durch eine Steuereinrichtung der Rundläuferpresse durchgeführt werden, insbesondere automatisch. Die Steuereinrichtung kann durch die Maschinensteuerung zum Steuern der Rundläuferpresse im Produktionsbetrieb gebildet sein bzw. in diese integriert sein. Auf Grundlage der Ergebnisse der Versuchspressung kann die Rundläuferpresse für den späteren Produktionsbetrieb mit allen Komponenten konfiguriert werden. Auch dies kann durch die Steuereinrichtung erfolgen. Dies betrifft zum Beispiel die gewünschte Einstellung der Dosierkurven und/oder der Druckeinrichtung, insbesondere der Druckeinheiten, wie Druckrollen oder Druckkeile, und/oder der Drehgeschwindigkeit des Rotors. Die Presskraft bzw. der die Presskraft charakterisierende Parameter kann mittels entsprechender Sensoren gemessen werden. Dazu kann die Rundläuferpresse entsprechende Sensoren aufweisen, beispielsweise Presskraftsensoren an der Druckeinrichtung, zum Beispiel angeordnet an den Druckeinheiten. Auch der die Presskraftcharakterisierende Parameter und/oder gegebenenfalls ermittelte weitere Parameter können mittels entsprechender Sensoren der Rundläuferpresse gemessen werden.

Die Verfahrensschritte des erfindungsgemäßen Verfahrens müssen nicht notwendigerweise in der in Anspruch 1 aufgeführten Reihenfolge ausgeführt werden. Insbesondere können die Druckeinheiten auch gleichzeitig zu dem oder vor dem Bringen des Stempelpaars in die Dosierposition oder gleichzeitig zu dem oder vor dem Füllen des zu verpressenden Materials in die Aufnahme aufeinander zugestellt werden.

Nach einer Ausgestaltung kann der die Presskraft charakterisierende Parameter eine Drehposition des Rotors, eine Steghöhe, ein Presskraftverlauf und/oder eine Druckhaltezeit bei einer vorgegebenen Presskraft sein. Die Drehposition des Rotors wird üblicherweise durch die Winkellage des Rotors erfasst. Die Steghöhe ist zum Beispiel über den axialen Weg des oberen und des unteren Pressstempels ermittelbar. Die Druckhaltezeit beschreibt den Zeitraum, währenddessen der Pressling auf das kleinste Volumen gestaucht ist. Der Weg der Pressstempel ändert sich während der Druckhaltezeit also nicht mehr.. Der Presskraftverlauf kann über der Zeit oder beispielsweise über der Rotordrehung erfasst werden.

Die Presskraft und/oder der die Presskraft charakterisierende Parameter kann wie erläutert für eine Einstellung der Rundläuferpresse für den Produktionsbetrieb berücksichtigt werden.

Nach einer weiteren Ausgestaltung kann vorgesehen sein, dass während der Versuchspressung und/oder nach der Versuchspressung weitere Parameter ermittelt werden, umfassend den Presskraftverlauf, den Stempelwegverlauf des oberen und/oder unteren Pressstempels, das Presskraftmaximum, die Druckhaltezeit bei einer vorgegebenen Presskraft und/oder die Steghöhe des hergestellten Presslings. Wiederum können geeignete Sensoren zum Messen der weiteren Parameter vorgesehen sein, wie eingangs erläutert. Weitere Parameter können auch nach der Versuchspressung ermittelt werden, beispielsweise eine Messung der tatsächlichen Steghöhe des hergestellten Presslings.

Auch die weiteren Parameter können für eine Einstellung der Rundläuferpresse für den Produktionsbetrieb berücksichtigt werden. Wie bereits erläutert, liegen die erfindungsgemäß ermittelten Werte bzw. Parameter bereits in der für den Produktionsbetrieb vorgesehenen Rundläuferpresse vor und können direkt verwendet werden, um das zu verpressende Material zu charakterisieren bzw. zum Beispiel abhängig von dem zu verpressenden Material die Einstellung der Rundläuferpresse für den Produktionsbetrieb mit dem Material einzustellen.

Nach einer weiteren Ausgestaltung ist es möglich, dass während der Versuchspressung nur das der Aufnahme der Matrizenscheibe zugeordnete Stempelpaar in dem Rotor verbaut ist. Die übrigen Stempelpaare des Rotors können demontiert werden. Selbstverständlich wäre es auch möglich, einige der Stempelpaare des Rotors in dem Rotor zu belassen und einige Stempelpaare auszubauen oder sämtliche Stempelpaare in dem Rotor zu belassen. Das Vorhandensein nur des für die Versuchspressung genutzten Stempelpaares hat den Vorteil, dass im Übrigen keine Wechselwirkung von Stempelpaaren mit Komponenten der Rundläuferpresse erfolgt, zum Beispiel ohne dass Material in die Aufnahmen gefüllt ist, denen die Stempelpaare zugeordnet sind.

Nach einer weiteren Ausgestaltung kann die Fülleinrichtung der Rundläuferpresse während der Versuchspressung demontiert oder inaktiv gestellt sein. Dies hat den Vorteil, dass die während der Versuchspressung nicht genutzten Aufnahmen nicht unerwünscht mit zu verpressendem Material gefüllt werden. Es ist beispielsweise möglich, die Fülleinrichtung vollständig oder teilweise aus dem Rotor auszubauen. Sie kann aber auch entleert sein oder eine Befüllöffnung, über die Material aus der Fülleinrichtung in die Aufnahmen gefüllt wird, verschlossen sein. Aufwendige Maßnahmen zum Verhindern eines Befüllens von Aufnahmen, zum Beispiel das Einsetzen von Blindmatrizen, können so vermieden werden.

Gemäß einer besonders praxisgemäßen Ausgestaltung kann das bei der Versuchspressung zu verpressende Material manuell in die Aufnahme gefüllt werden. Es ist aber auch denkbar, das Material durch die Fülleinrichtung oder eine andere Befüllvorrichtung in die Aufnahme zu füllen.

Der Rotor kann nach einer weiteren Ausgestaltung bei der Versuchspressung mit mindestens einem Drittel der im Produktionsbetrieb der Rundläuferpresse erreichten Drehgeschwindigkeit drehend angetrieben werden. Der Rotor kann auch bis zu der vollen Produktionsgeschwindigkeit im Produktionsbetrieb drehend angetrieben werden. Durch eine Drehgeschwindigkeit gemäß der vorgenannten Ausgestaltung werden für den späteren Produktionsbetrieb besonders repräsentative Versuchsbedingungen geschaffen. Übliche Produktionsgeschwindigkeiten eines Rotors einer Rundläuferpresse können zum Beispiel zwischen 5 und 120 Umdrehungen/min liegen.

Nach einer weiteren Ausgestaltung können mehrere Versuchspressungen durchgeführt werden, wobei der Pressekraftverlauf und/oder der Stempelwegverlauf durch eine Variation der Drehgeschwindigkeit des Rotors variiert werden. Beispielsweise können sinusförmige und/oder sägezahnförmige und/oder rechteckförmige Presskraftverläufe und/oder Stempelwegverläufe über der Zeit oder der Rotordrehung eingestellt werden. Durch die variable Ansteuerung des Drehantriebs des Rotors lassen sich problemlos verschiedene Presskraftverläufe oder Stempelwegverläufe einstellen. Das Finden der optimalen Einstellung der Rundläuferpresse für den späteren Produktionsbetrieb wird so erleichtert.

Nach einer weiteren Ausgestaltung können mehrere Versuchspressungen durchgeführt werden, wobei Stempelpaare mit unterschiedlichen Stempelkopf- und/oder Stempelspitzengeometrien eingesetzt werden. Die Stempelspitzen der Pressstempel tauchen im Produktionsbetrieb zum Verpressen des Materials zu Presslingen in die Aufnahmen der Matrizenscheibe ein. Sie sind an einem Ende der Pressstempel angeordnet. Am gegenüberliegenden Ende sind die Stempelköpfe angeordnet, die mit den Steuerkurven zum Steuern der axialen Bewegung der Pressstempel zusammenwirken. Auf diese Weise kann die Rundläuferpresse für unterschiedliche Stempelkopf- oder Stempelspitzenformen vorkonfiguriert werden. Die jeweils optimalen Betriebsparameter für den Produktionsbetrieb können in einer Steuereinrichtung der Rundläuferpresse gespeichert werden, so dass ein Benutzer diese zum Beispiel durch Vorgabe des jeweils verbauten Stempeltyps auswählen kann. Es ist auch möglich, durch Modellierung der Bewegung der Pressstempel und/oder des Geschwindigkeitsverlaufs beim Pressvorgang über die Rotordrehzahl verschiedene Stempelformen für die Einstellung der Rundläuferpresse zu simulieren.

Ein Ausführungsbeispiel der Erfindung wird nachfolgend anhand von Figuren näher erläutert. Es zeigen schematisch:
- Figur 1: eine bei dem erfindungsgemäßen Verfahren verwendete Rundläuferpresse in abgewickelter Darstellung des Rotors,
- Figur 2: eine ausschnittsweise Vergrößerung von Teilen der in Figur 1 dargestellten Rundläuferpresse zur Veranschaulichung des erfindungsgemäßen Verfahrens.

Soweit nichts anderes angegeben ist, bezeichnen in den Figuren gleiche Bezugszeichen gleiche Gegenstände.

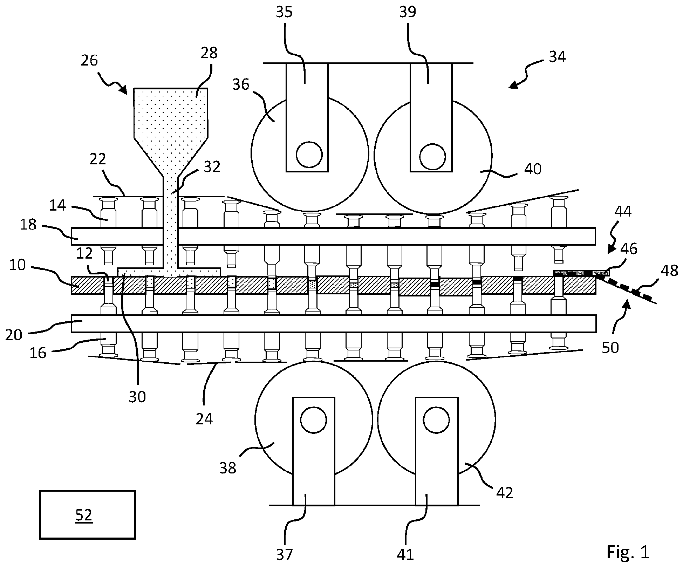

Die in Figur 1 gezeigte Rundläuferpresse ist eine Rundläuferpresse zur Tablettenherstellung, wie sie bei der vorliegenden Erfindung zum Einsatz kommen kann, und in der pulverförmiges Material zu Presslingen, insbesondere Tabletten verpresst wird. Der Rotor der Rundläuferpresse ist durch einen Drehantrieb drehend angetrieben und umfasst eine Matrizenscheibe 10, die eine Mehrzahl von Aufnahmen 12 aufweist. Die Aufnahmen 12 können beispielsweise durch Bohrungen der Matrizenscheibe 10 gebildet sein. Weiter umfasst der Rotor eine Mehrzahl von oberen Pressstempeln 14 und unteren Pressstempeln 16, die mit der Matrizenscheibe 10 synchron umlaufen. Die oberen Pressstempel 14 sind in einer oberen Stempelführung 18 axial geführt und die unteren Pressstempel 16 sind in einer unteren Stempelführung 20 axial geführt. Die axiale Bewegung der oberen Pressstempel 14 und unteren Pressstempel 16 im Zuge der Drehung des Rotors wird durch obere Steuerkurvenelemente 22 und untere Steuerkurvenelemente 24 gesteuert. Weiterhin ist eine Fülleinrichtung 26 vorgesehen, die ein Füllreservoir 28 und eine Füllkammer 30 aufweist, die über ein Füllrohr 32 verbunden sind. Auf diese Weise gelangt in dem vorliegenden Beispiel pulverförmiges Material schwerkraftbedingt aus dem Füllreservoir 28 über das Füllrohr 32 in die Füllkammer 30 und aus dieser über eine an der Unterseite der Füllkammer 30 vorgesehene Befüllöffnung wiederum schwerkraftbedingt in die Aufnahmen 12 der Matrizenscheibe 10.

Die Rundläuferpresse umfasst weiterhin eine Druckeinrichtung 34. Die Druckeinrichtung 34 umfasst im dargestellten Beispiel eine Vordruckeinrichtung mit einer an einer oberen Halterung 35 gehaltenen oberen Druckrolle 36 und einer an einer unteren Halterung 37 gehaltenen unteren Druckrolle 38, sowie eine Hauptdruckeinrichtung mit einer an einer oberen Halterung 39 gehaltenen oberen Druckrolle 40 und einer an einer unteren Halterung 41 gehaltenen unteren Druckrolle 42. Darüber hinaus umfasst die Rundläuferpresse eine Auswurfeinrichtung 44 und eine Abstreifeinrichtung 46 mit einem Abstreifelement, das die in der Rundläuferpresse hergestellten Tabletten 48 einer Ablaufeinrichtung 50 zum Abführen aus der Rundläuferpresse zuführt. Die Abstreifeinrichtung 46 kann zum Beispiel ein vorzugsweise sichelförmiges Abstreifelement umfassen, das im Bereich der Auswurfeinrichtung 44 durch die unteren Pressstempel 16 auf die Oberseite der Matrizenscheibe 10 geförderte Tabletten 48 von der Matrizenscheibe 10 abstreift und der Ablaufeinrichtung 50 zuführt.

Weiterhin umfasst die Rundläuferpresse eine Steuereinrichtung 52 zum Steuern des Betriebs der Rundläuferpresse und zur Durchführung des erfindungsgemäßen Verfahrens, wie nachfolgend näher erläutert.

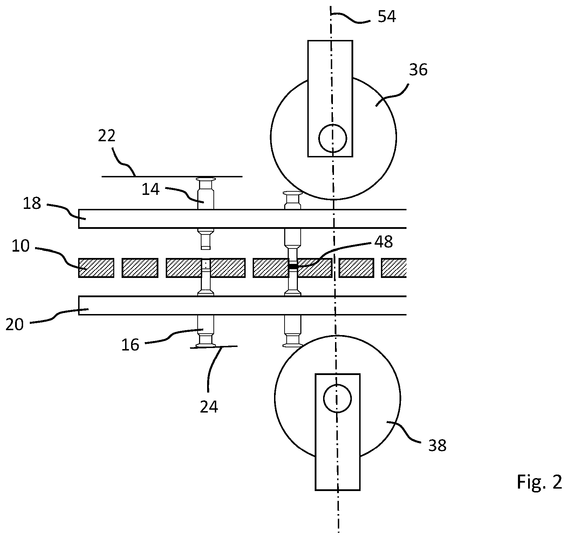

In Figur 2 ist ein Teil der in Figur 1 dargestellten Rundläuferpresse zur Veranschaulichung des erfindungsgemäßen Verfahrens dargestellt. Dabei sind nur ein oberes Steuerkurvenelement 22 und ein unteres Steuerkurvenelement 24 gezeigt sowie nur zwei Stempelpaare aus oberen und unteren Pressstempeln 14, 16 sowie lediglich die obere Druckrolle 36 und die untere Druckrolle 38 der Vordruckeinrichtung der Druckeinrichtung 34. Zur Durchführung des Verfahrens kann beispielsweise nur ein Stempelpaar aus oberem und unterem Pressstempel 14, 16 in dem Rotor montiert sein. In Figur 2 sind zur Veranschaulichung unterschiedlicher Verfahrensschritte des Verfahrens zwei Stempelpaare gezeigt.

Das in Figur 2 links dargestellte Stempelpaar aus oberem und unterem Pressstempel 14, 16 befindet sich in der Dosierposition, in der der obere Pressstempel 14 aus der dem Stempelpaar zugeordneten Aufnahme 12 der Matrizenscheibe 10 nach oben heraus bewegt ist, insbesondere durch das in Figur 2 dargestellte obere Steuerkurvenelement 22. Der untere Pressstempel 16 befindet sich, gesteuert durch das Steuerkurvenelement 24, bei dem es sich insbesondere um ein Dosierkurvenelement 24 handelt, teilweise in der Aufnahme 12 und definiert damit eine maximale Füllhöhe der Aufnahme 12 für in die Aufnahme 12 gefülltes Material. In dieser Dosierposition wird das Material bei angehaltenem Rotor zum Beispiel manuell in die Aufnahme 12 gefüllt. Dabei wird die Aufnahme 12 bis zu ihrem oberen Rand vollständig befüllt. Gegebenenfalls überschüssiges Material kann von der Oberseite der Matrizenscheibe 10 abgestreift werden.

Anschließend wird der Rotor in Drehbewegung versetzt, so dass das Stempelpaar sich mit der Drehung der Matrizenscheibe 10 in Figur 2 nach rechts bewegt und in Kontakt mit den Druckrollen 36 und 38 gelangt, wie für das in Figur 2 rechts dargestellte Stempelpaar zu erkennen. Die Druckrollen 36, 38 wurden zuvor auf ein Maß aufeinander zu bewegt, so dass eine erwartete Steghöhe eines in der Versuchspressung herzustellenden Presslings erreicht wird bevor das Stempelpaar bei einer Drehung des Rotors den Ort des geringsten Abstands zwischen den Druckrollen 36, 38 überschreitet, insbesondere erreicht. Durch die Erfindung wird sichergestellt, dass im Rahmen der Versuchspressung die oberen und unteren Pressstempel 14, 16 die in Figur 2 eingezeichnete gedachte Verbindungslinie 54 zwischen den Drehachsen der Druckrollen 36, 38 jedenfalls nicht überschreiten, insbesondere nicht erreichen.

Durch diese Einstellung der Druckrollen 36, 38 ist sichergestellt, dass eine vorgegebene maximale Presskraft an der Druckeinrichtung 34, insbesondere an den oberen und unteren Druckrollen 36, 38, erreicht wird, bevor die oberen und unteren Pressstempel 14, 16 im Zuge ihrer Drehbewegung den Bereich des geringsten Abstands zwischen den Druckrollen 36, 38 überschreiten. Die Presskraft und/oder ein die Presskraft charakterisierender Parameter werden während des Kontakts der Pressstempel 14, 16 mit den Druckrollen 36, 38 gemessen, insbesondere mittels geeigneter Sensoren der Rundläuferpresse. Bei Erreichen einer vorgegebenen Presskraft und/oder eines vorgegebenen Werts des die Presskraft charakterisierenden Parameters wird die Drehbewegung des Rotors gestoppt und der Rotor im Anschluss in die entgegengesetzte Richtung gedreht, so dass das Stempelpaar wieder außer Kontakt mit den Druckrollen 36, 38 gelangt. Der hergestellte Pressling 48 kann anschließend aus der Aufnahme 12 der Matrizenscheibe 10 entnommen werden. Die erfassten Werte können für die Einstellung der Rundläuferpresse für den Produktionsbetrieb mit dem im Rahmen der Versuchspressung verpressten Material genutzt werden.

Wie aus den obigen Erläuterungen ersichtlich, wird bei der vorliegenden Rundläuferpresse die Versuchspressung mit den Druckrollen 36, 38 der Vordruckeinrichtung der Druckeinrichtung 34 durchgeführt. Selbstverständlich könnte die Versuchspressung in gleicher Weise mit den Druckrollen 40, 42 der Hauptdruckeinrichtung der Druckeinrichtung 34 durchgeführt werden, entweder bei einer Rundläuferpresse, die keine Vordruckeinrichtung aufweist, oder indem die Druckrollen 36, 38 der Vordruckeinrichtung ausreichend weit auseinandergefahren werden, so dass das Stempelpaar aus oberem und unterem Pressstempel 14, 16 entweder gar nicht mit diesen in Kontakt kommt oder nur in einem Maße, das nicht zum Erreichen der vorgegebenen Presskraft oder des Werts des die Presskraft charakterisierenden Parameters ausreicht.

### Bezugszeichenliste

- 10: Matrizenscheibe
- 12: Aufnahme
- 14: oberer Pressstempel
- 16: unterer Pressstempel
- 18: obere Stempelführung
- 20: untere Stempelführung
- 22: oberes Steuerkurvenelement
- 24: unteres Steuerkurvenelement
- 26: Fülleinrichtung
- 28: Füllreservoir
- 30: Füllkammer
- 32: Füllrohr
- 34: Druckeinrichtung
- 36: obere Druckrolle
- 38: untere Druckrolle
- 40: obere Druckrolle
- 42: untere Druckrolle
- 44: Auswurfeinrichtung
- 46: Abstreifeinrichtung
- 48: Pressling
- 50: Ablaufeinrichtung
- 52: Steuereinrichtung
- 54: Verbindungslinie

## Patentansprüche

1. Verfahren zur Versuchspressung von Presslingen in einer Rundläuferpresse, umfassend einen drehend angetriebenen Rotor mit oberen und unteren Pressstempeln (14, 16), einer oberen und unteren Stempelführung (18, 20) für die oberen und unteren Pressstempel (14, 16) und einer Matrizenschreibe (10) zwischen den Stempelführungen (18, 20), wobei die oberen und unteren Pressstempel (14, 16) im Produktionsbetrieb der Rundläuferpresse mit Aufnahmen (12) der Matrizenscheibe (10) zusammenwirken, weiter umfassend eine Fülleinrichtung (26), in der im Produktionsbetrieb der Rundläuferpresse zu verpressendes Material in die Aufnahmen (12) gefüllt wird, weiter umfassend eine Druckeinrichtung (34) mit einer oberen Druckeinheit (36) und einer unteren Druckeinheit (38), die im Produktionsbetrieb der Rundläuferpresse mit den oberen und unteren Pressstempeln (14, 16) zusammenwirken, so dass diese in den Aufnahmen (12) befindliches Material zu Presslingen verpressen, wobei das Verfahren die folgenden Schritte umfasst:
• ein einer Aufnahme (12) der Matrizenscheibe (10) zugeordnetes Stempelpaar aus einem oberen und unteren Pressstempel (14, 16) wird in eine Dosierposition gebracht, in der der obere Pressstempel (14) aus der Aufnahme (12) nach oben herausbewegt ist und sich der untere Pressstempel (16) teilweise in der Aufnahme (12) befindet, so dass der untere Pressstempel (16) eine maximale Füllhöhe von zu verpressendem Material in der Aufnahme (12) vorgibt,
• zu verpressendes Material wird in die Aufnahme (12) gefüllt,
• die Druckeinheiten (36, 38) der Druckeinrichtung (34) werden derart aufeinander zugestellt, dass eine erwartete Steghöhe eines in der Versuchspressung herzustellenden Presslings (48) erreicht wird bevor das Stempelpaar bei einer Drehung des Rotors den Ort des geringsten Abstands zwischen den Druckeinheiten (36, 38) überschreitet,
• der Rotor wird in Drehbewegung versetzt, so dass das Stempelpaar zum Verpressen des in die Aufnahme (12) gefüllten Materials zu einem Pressling (48) in Kontakt mit den Druckeinheiten (36, 38) gelangt, wobei die Presskraft und/oder ein die Presskraft charakterisierender Parameter ermittelt wird,
**gekennzeichnet durch** den folgenden Schritt:
• bei Erreichen einer vorgegebenen Presskraft und/oder eines vorgegebenen Werts des die Presskraft charakterisierenden Parameters wird der Rotor angehalten und in die entgegengesetzte Richtung gedreht, so dass das Stempelpaar außer Kontakt mit den Druckeinheiten (36, 38) gelangt.

2. Verfahren nach Anspruch 1, **dadurch gekennzeichnet, dass** der die Presskraft charakterisierende Parameter eine Drehposition des Rotors, eine Steghöhe, ein Presskraftverlauf und/oder eine Druckhaltezeit bei einer vorgegebenen Presskraft ist.

3. Verfahren nach einem der vorhergehenden Ansprüche, **dadurch gekennzeichnet, dass** die Presskraft und/oder der die Presskraft charakterisierende Parameter für eine Einstellung der Rundläuferpresse für den Produktionsbetrieb berücksichtigt wird.

4. Verfahren nach einem der vorhergehenden Ansprüche, **dadurch gekennzeichnet, dass** während der Versuchspressung und/oder nach der Versuchspressung weitere Parameter ermittelt werden, umfassend den Presskraftverlauf, den Stempelwegverlauf des oberen und/oder unteren Pressstempels, das Presskraftmaximum, die Druckhaltezeit bei einer vorgegebenen Presskraft und/oder die Steghöhe des hergestellten Presslings (48).

5. Verfahren nach Anspruch 4, **dadurch gekennzeichnet, dass** die weiteren Parameter für eine Einstellung der Rundläuferpresse für den Produktionsbetrieb berücksichtigt werden.

6. Verfahren nach einem der vorhergehenden Ansprüche, **dadurch gekennzeichnet, dass** während der Versuchspressung nur das der Aufnahme (12) der Matrizenscheibe (10) zugeordnete Stempelpaar in dem Rotor verbaut ist.

7. Verfahren nach einem der vorhergehenden Ansprüche, **dadurch gekennzeichnet, dass** während der Versuchspressung die Fülleinrichtung (26) demontiert oder inaktiv gestellt ist.

8. Verfahren nach einem der vorhergehenden Ansprüche, **dadurch gekennzeichnet, dass** das bei der Versuchspressung zu verpressende Material manuell in die Aufnahme (12) gefüllt wird.

9. Verfahren nach einem der vorhergehenden Ansprüche, **dadurch gekennzeichnet, dass** der Rotor bei der Versuchspressung mit mindestens einem Drittel der im Produktionsbetrieb der Rundläuferpresse erreichten Drehgeschwindigkeit drehend angetrieben wird.

10. Verfahren nach einem der vorhergehenden Ansprüche, **dadurch gekennzeichnet, dass** mehrere Versuchspressungen durchgeführt werden, wobei der Presskraftverlauf und/oder der Stempelwegverlauf durch eine Variation der Drehgeschwindigkeit des Rotors variiert werden.

11. Verfahren nach Anspruch 10, **dadurch gekennzeichnet, dass** sinusförmige und/oder sägezahnförmige und/oder rechteckförmige Presskraftverläufe und/oder Stempelwegverläufe eingestellt werden.

12. Verfahren nach einem der vorhergehenden Ansprüche, **dadurch gekennzeichnet, dass** mehrere Versuchspressungen durchgeführt werden, wobei Stempelpaare mit unterschiedlichen Stempelkopf- und/oder Stempelspitzengeometrien eingesetzt werden.

## Claims

1. A process to perform a pellet compression test in a rotary press, comprising a rotationally driven rotor having upper and lower press punches (14, 16), an upper and lower punch guide (18, 20) for the upper and lower press punches (14, 16) and a die plate (10) between the punch guides (18, 20), wherein the upper and lower press punches (14, 16) cooperate with receptacles (12) of the die plate (10) during production operation of the rotary press, further comprising a filling apparatus (26) in which material to be compacted is filled into the receptacles (12) during production operation of the rotary press, further comprising a pressure apparatus (34) having an upper pressure unit (36) and a lower pressure unit (38) which cooperate with the upper and lower press punches (14, 16) during production operation of the rotary press, such that said press punches compact material located in the receptacles (12) into pellets, wherein the process comprises the following steps:
• a punch pair consisting of an upper and lower press punch (14, 16) and assigned to a receptacle (12) of the die plate (10) is brought into a dosing position, in which the upper press punch (14) is moved upwards out of the receptacle (12) and the lower press punch (16) is partially located in the receptacle (12), such that the lower press punch (16) specifies a maximum fill height of material to be compacted in the receptacle (12),
• material to be compacted is filled into the receptacle (12),
• the pressure units (36, 38) of the pressure apparatus (34) are moved towards one another in such a way that an expected band height of a pellet (48) to be produced during the compression test is achieved before the punch pair passes the location of the smallest distance between the pressure units (36, 38) during a rotation of the rotor,
• the rotor is set into rotary movement, such that the punch pair comes into contact with the pressure units (36, 38) in order to compact the material filled into the receptacle (12) into a pellet (48), wherein the pressing force and/or a parameter characterizing the pressing force is determined,
**characterized by** the following step:
• when a specified pressing force and/or a specified value of the parameter characterizing the pressing force has been achieved, the rotor is stopped and rotated in the opposite direction, such that the punch pair loses contact with the pressure units (36, 38).

2. The process according to claim 1, **characterized in that** the parameter characterizing the pressing force is a rotary position of the rotor, a band height, a pressing force curve and/or a pressure holding time at a specified pressing force.

3. The process according to one of the preceding claims, **characterized in that** the pressing force and/or the parameter characterizing the pressing force is taken into account for a setting of the rotary press for production operation.

4. The process according to one of the preceding claims, **characterized in that**, during the compression test and/or after the compression test, further parameters are determined, including the pressing force curve, the punch travel curve of the upper and/or lower press punch, the pressing force maximum, the pressure holding time at a specified pressing force and/or the band height of the produced pellet (48).

5. The process according to claim 4, **characterized in that** the further parameters are taken into account for a setting of the rotary press for production operation.

6. The process according to one of the preceding claims, **characterized in that** only the punch pair assigned to the receptacle (12) of the die plate (10) is installed in the rotor during the compression test.

7. The process according to one of the preceding claims, **characterized in that** the filling apparatus (26) is removed or deactivated during the compression test.

8. The process according to one of the preceding claims, **characterized in that** the material to be compacted during the compression test is manually filled into the receptacle (12).

9. The process according to one of the preceding claims, **characterized in that**, during the compression test, the rotor is rotationally driven at at least one third of the rotational speed achieved during production operation of the rotary press.

10. The process according to one of the preceding claims, **characterized in that** multiple compression tests are performed, wherein the pressing force curve and/or the punch travel curve are varied by varying the rotational speed of the rotor.

11. The process according to claim 10, **characterized in that** sinusoidal and/or sawtooth-shaped and/or rectangular pressing force curves and/or punch travel curves are set.

12. The process according to one of the preceding claims, **characterized in that** multiple compression tests are performed, wherein punch pairs having different punch head and/or punch tip geometries are used.

## Revendications

1. Procédé de réalisation d'essais de compression de comprimés dans une presse rotative, comportant un rotor entraîné de façon rotative avec des poinçons de compression supérieurs et inférieurs (14, 16), un guide de poinçons supérieur et inférieur (18, 20) pour les poinçons de compression supérieurs et inférieurs (14, 16) et un disque de matrice (10) entre les guides de poinçons supérieur et inférieur (18, 20), dans lequel les poinçons de compression supérieurs et inférieurs (14, 16) coopèrent avec des logements (12) du disque de matrice (10) pendant l'activité de production de la presse rotative, comportant en outre un dispositif de remplissage (26), dans lequel du matériau à comprimer est rempli dans les logements (12) pendant l'activité de production de la presse rotative, comportant en outre un dispositif de pression (34) avec une unité de pression supérieure (36) et une unité de pression inférieure (38), lesquelles coopèrent avec les poinçons de compression supérieurs et inférieurs (14, 16) pendant l'activité de production de la presse rotative, de sorte que ceux-ci compriment du matériau situé dans les logements (12) en comprimés, dans lequel le procédé comporte les étapes suivantes :
• une paire de poinçons attribuée à un logement (12) du disque de matrice (10), comprenant un poinçon de compression supérieur et inférieur (14, 16), est amenée dans une position de dosage, dans laquelle le poinçon de compression supérieur (14) est déplacé vers le haut hors du logement (12) et le poinçon de compression inférieur (16) se situe partiellement dans le logement (12), de sorte que le poinçon de compression inférieur (16) définit une hauteur de remplissage maximale de matériau à comprimer dans le logement (12),
• du matériau à comprimer est rempli dans le logement (12),
• les unités de pression (36, 38) du dispositif de pression (34) sont déplacées de telle façon les unes vers les autres, qu'une hauteur d'âme attendue d'un comprimé (48) à fabriquer pendant l'essai de compression est atteinte avant que la paire de poinçons ne dépasse l'emplacement de l'écart minimal entre les unités de pression (36, 38) lors d'une rotation du rotor,
• le rotor est amené en rotation, de sorte que la paire de poinçons vient en contact avec les unités de pression (36, 38) pour comprimer le matériau rempli dans le logement (12) en un comprimé (48), dans lequel la force de pression et/ou un paramètre caractérisant la force de pression sont déterminés,
**caractérisé par** l'étape suivante :
• lors de l'atteinte d'une force de pression prédéfinie et/ou d'une valeur prédéfinie du paramètre caractérisant la force de pression, le rotor est arrêté et mis en rotation dans le sens opposé, de sorte que la paire de poinçons arrive hors de contact avec les unités de pression (36, 38).

2. Procédé selon la revendication 1, **caractérisé en ce que** le paramètre caractérisant la force de pression est une position de rotation du rotor, une hauteur d'âme, une courbe de force de pression et/ou un temps d'arrêt de pression pour une force de pression prédéfinie.

3. Procédé selon l'une des revendications précédentes, **caractérisé en ce que** la force de pression et/ou le paramètre caractérisant la force de pression sont pris en compte dans un réglage de la presse rotative pour l'activité de production.

4. Procédé selon l'une des revendications précédentes, **caractérisé en ce que** pendant l'essai de compression et/ou après l'essai de compression, d'autres paramètres sont déterminés, comportant la courbe de force de pression, l'itinéraire de poinçon du poinçon de compression supérieur et/ou inférieur, le maximum de force de pression, le temps d'arrêt de pression pour une force de pression prédéfinie et/ou la hauteur d'âme du comprimé (48) fabriqué.

5. Procédé selon la revendication 4, **caractérisé en ce que** les autres paramètres sont pris en compte dans un réglage de la pression rotative pour l'activité de production.

6. Procédé selon l'une des revendications précédentes, **caractérisé en ce que** pendant l'essai de compression, seule la paire de poinçons attribuée au logement (12) du disque de matrice (10) est installée dans le rotor.

7. Procédé selon l'une des revendications précédentes, **caractérisé en ce que** pendant l'essai de compression, le dispositif de remplissage (26) est démonté ou rendu inactif.

8. Procédé selon l'une des revendications précédentes, **caractérisé en ce que** lors de l'essai de compression, du matériau à comprimer est rempli manuellement dans le logement (12).

9. Procédé selon l'une des revendications précédentes, **caractérisé en ce que** lors de l'essai de compression, le rotor est entraîné en rotation avec au moins un tiers de la vitesse de rotation atteinte pendant l'activité de production de la presse rotative.

10. Procédé selon l'une des revendications précédentes, **caractérisé en ce que** plusieurs essais de compression sont réalisés, dans lequel la courbe de force de pression et/ou l'itinéraire de poinçon sont modifiés par modification de la vitesse de rotation du rotor.

11. Procédé selon la revendication 10, **caractérisé en ce que** des courbes de force de pression et/ou des itinéraires de poinçon sinusoïdaux et/ou en dents de scie et/ou rectangulaires sont réglées.

12. Procédé selon l'une des revendications précédentes, **caractérisé en ce que** plusieurs essais de compression sont réalisés, dans lequel des paires de poinçons avec des géométries de tête de poinçon et/ou de pointe de poinçon variables sont utilisées.
